# EUROPEAN PATENT APPLICATION

(11) **EP 3 382 347 A1**
(43) Date of publication of application: **03.10.2018**
(21) Application number: 17020128.9
(22) Date of filing: 30.03.2017
(51) Int. Cl.: G01D 4/00

(54) **A SENSOR AND A METHOD FOR READING A UTILITY METER**

(71) Applicant: NorthQ ApS, 2100 Kobenhavn Ø (DK)
(72) Inventor: Iacoboae, Dan, 2880 Bagsværd (DK)

(57) **Abstract**

The present invention provides a sensor (120) for reading a utility meter (110), the sensor (120) comprising a radiation emitter (1202) configured to emit radiation of a predetermined intensity on to a rotating element (1102) of the utility meter (110), a radiation detector (1204) configured to receive reflected radiation from a reflective surface (210) of the rotating element (1102) of the utility meter (110), one or more light emitters (1206) and a control module (1208) configured to instruct the one or more light emitters (1206) to indicate, in a direction away from the utility meter (110), an intensity of the reflected radiation received by the radiation detector (1204).

## Description

### TECHNICAL FIELD

Embodiments of the present invention relate to utility meters and more particularly, to a sensor and a method for reading a utility meter, that allow accurate positioning of the sensor.

### BACKGROUND ART

Sensors are known which are fixed to a power/water/gas meter having a rotating disc. The rotating disc has a reflective surface and a marker, such as a black dot provided on the reflective surface. The sensors comprise a radiation emitter and a radiation detector, emitting radiation towards the rotating disc and receiving reflected radiation from the reflective surface, respectively, to simply detect rotations of the rotating disc. The sensors are fixed to a portion of a window, through which the rotating disc may be observed. One solution in this regard is seen in US20130213156A1.

### SUMMARY OF THE INVENTION

A first aspect of the present invention relates to a sensor for reading a utility meter, the sensor comprising a radiation emitter configured to emit radiation of a predetermined intensity on to a rotating element of the utility meter, a radiation detector configured to receive reflected radiation from a reflective surface of the rotating element of the utility meter, one or more light emitters and a control module configured to instruct the one or more light emitters to indicate, in a direction away from the utility meter, an intensity of the received, reflected radiation received by the radiation detector.

The indication of the intensity of the received reflected radiation allows better and more accurate positioning of the sensor with respect to the utility meter. The greater the intensity of the received reflected radiation, the more optimal the positioning, and an optimal position may be found before e.g. fastening the sensor the meter.

In the present context, a "utility meter" is a meter for determining or quantifying consumption or providing of a commodity such as electricity, water or gas. The utility meter has a rotating element, such as a rotating disc or a needle. Further, each rotation of the rotating element indicates consumption/providing of a predetermined amount of the commodity. The utility meter often has a numerical read-out illustrating a total number of rotations and thus a total amount of provided/consumed commodity.

In the present context, a "radiation emitter" is a device or a setup configured to emit electromagnetic radiation of any predetermined intensity and wavelength. In one situation, a constant intensity is emitted in the form of pulses or a continuous beam is emitted. Naturally, any variation thereof may be used.

In the present context, a "rotating element" may be a disc or a needle, for example. Further, a "reflective surface", in case of the rotating disc, may be an edge or any other surface of the rotating element having a non-zero reflectivity. In case of the rotating needle, the reflective surface may be a surface of a base of the meter at which the rotating needle has been provided and is being swept by the rotating needle. A "marker" may be any portion of the rotating element and has a reflectivity different from the reflective surface. In case of the rotating disc, the marker may be a black dot at the reflective surface (or a reflective portion of an otherwise less reflective edge). Whereas in case of a rotating needle, the marker may be the all of or a portion of the top surface of the rotating needle, and passing of the rotating needle may constitute passing of the marker.

In the present context, "received reflected radiation" may only be a component of total incident radiation falling at the radiation detector. The incident radiation may comprise other components such as ambient light. Optical filters may be used for removing such ambient light. Alternatively or in addition, filters may be used in hardware at the received reflected radiation and/or in software to cancel out the effects of ambient light and other undesirable components of the incident radiation, such as if the radiation emitted is pulsed..

In the present context, "one or more light emitters" may be 1, 2, 3, 4, 5, 6, 7, 8, 9, 10, 12, 14, 16, 18, 20, 22, 24, 26 light emitters or more. Any number may be used. Also, any type of light emitter may be used, such as a laser, LED, OLED or the like. Preferably, the light emitted is visible to a user to ascertain position quality.

In the present context, a "control module" may be any type of processor, chip, controller, ASIC, FPGA or the like. One or more elements may be provided and it may be built into an assembly with the radiation emitter/detector and light emitter(s) if desired.

In the present context, a light emitter may be "controlled" if the power supply thereto is controlled as desired. Alternatively, a power supply to the light emitter may be controlled to give the desired light output of the particular light emitter. Naturally, radiation output of the light emitter may also be controlled (blocked if not desired output)

In the present context, a "direction away from the utility meter" may be a direction towards a user positioning the sensor with respect to the utility meter. The sensor may comprise a housing having two opposing surfaces, where the radiation is emitted through or away from one surface and the light emitted through or away from the opposite surface. The radiation emitted and the light emitted may be emitted in two opposite directions.

In the present context, "intensity" may be determined from all incident radiation received or from radiation within a predetermined wavelength or wavelength interval, if desired. The intensity may be determined within pulses only (coordinated with pulses emitted for example) or within a predetermined period of time, for example.

In the present context, the radiation emitter and the radiation detector may be in "close proximity" when projections of their respective housings overlap, when projected on a plane perpendicular to a direction of the emitted radiation (see further below).

The radiation emitter may be a laser. The laser allows sufficient intensity for the emitted and reflected radiation also when the distance from the sensor to the rotating element is large (more than 5 cm for example).

Preferably, the radiation emitted is visible. In that manner, a person moving the sensor in relation to the meter may visibly ensure that the radiation impinges on the rotating element and thus visibly perform a coarse positioning of the sensor in relation to the meter.

The control module preferably is further configured to indicate the intensity of the received reflected radiation by illuminating a number of the one or more light emitters, the number being correlated with the intensity of the received reflected radiation. In one embodiment, the number is proportional to the intensity so that the higher the intensity, the more light emitters are operated. The light emitters may be provided as a linear array, where the emitters are operated from e.g. the left, so that the amount of intensity received may be read out simply by how far to the right light is emitted.

The control module preferably is further configured to indicate the intensity of the received reflected radiation by adapting an intensity of the one or more light emitters, the intensity of the one or more light emitters being correlated with the intensity of the received reflected radiation. In one embodiment, the higher the intensity output the higher the intensity is received, so that when a sufficiently high intensity is output, the position is acceptable. In another embodiment, a reverse proportionality is used where, if a sufficient intensity of the received reflected radiation is received, a low intensity or no light is emitted.

The control module preferably is further configured to indicate the intensity of the received reflected radiation by adapting a blinking frequency of the one or more light emitters, the blinking frequency being correlated with the intensity of the received reflected radiation. In one embodiment, a sufficiently high intensity received may be indicated by a high frequency or a constant intensity output. Alternatively, a sufficiently high intensity received may result in a low blinking frequency or no light emitted.

As also would be appreciated by a person skilled in the art, other manners may also be used for indicating the position and/or the intensity received, such as a color of the light emitted. A red color may indicate a low intensity received and a green color a sufficiently high intensity received. Different colors may be output by different light emitters or the same light emitter. Combinations of these different indication manners may also be used.

Naturally, a sufficiently good position may be indicated in any manner. This may be determined from the intensity received. Thus, additional light emitters may be operated, a pulsing frequency used, a color used or the like to indicate to the user that now the position is good enough, so that the user need not attempt further optimization.

The sensor preferably further comprises a fastening arrangement configured to fasten the sensor to a housing of the utility meter. Once suitably positioned, the sensor may be fastened and another mode entered by the sensor, as described below. Fastening may be performed using glue, adhesives, adhesive tape, suction, bolting, screwing, clamping, press fitting, welding or the like.

The control module preferably is further configured to operate the sensor in an installation mode and an operational mode. The installation mode may be the above mode where the light emitters are used. The operational mode may be a mode where the passing of a marker on the reflective surface is detected and which may be carried out in a manner allowing saving of power, making the invention suitable for battery operation.

The control module preferably is further configured to instruct the radiation emitter to, in the installation mode, emit the radiation in the form of pulses at a first frequency. Alternatively, the control module may be configured to, in the installation mode, instruct the radiation emitter to emit the radiation in form of a continuous beam.

It is desired that the user gets a real time or near real time indication of the quality of the position in the form of the intensity received. Thus, a continuous beam or high frequency pulses are desired. Once the position is obtained, the operational mode may be entered using lower frequency pulses to save power, where the frequency, as is described further below, may be determined on the basis of the consumption so that no passing of the marker is missed.

The reflective surface preferably comprises a marker having a reflectivity different from a reflectivity of rest of the reflective surface and wherein the control module is further configured to adapt the indication in order to compensate for passing of the marker, during the installation mode. Therefore, erroneous indications during the installation mode, caused due to the marker, can be eliminated. As also would be appreciated by a person skilled in the art, if the marker has a lower reflectivity, a lower intensity will be received when the marker reflects, and this may look like a worse position.

Thus, the control module may be able to determine when the marker is reflecting (positioned to face the radiation sensor) and may take that into account when indicating. In one embodiment, the indication is based on an estimated reflection, such as based on a mean value over a period of time, as this will even out the passing of the marker. Alternatively, if e.g. multiple radiation detectors are used, the different reflection of the marker may initially be seen in the output of a first radiation detector of the multiple radiation detectors, whereby the adaptation may be carried out. If, on the other hand, the same reflection change is seen from two or all radiation detectors, the reflection change may be due to a position change and no compensation is performed.

The control module preferably is further configured to instruct the radiation emitter to emit the radiation in form of pulses at a second frequency, during the operational mode. The second frequency may be lower than the first frequency in order to save power once the installation is completed.

Alternatively or in addition to different first and second frequencies, in the installation mode and the operating mode, different pulse widths (different duty cycle or percentage within a period where radiation is output) may be used. Thus, a larger pulse width may be used in the installation mode compared to the operating mode. In one embodiment, a frequency of 60Hz pulses are used where the installation mode uses a pulse width of 2.5ms and the operational mode has a pulse width of 70µs-3.5ms, depending on the consumption determined or expected, the reflectiveness of the disc, the quality of any glass through which the radiation/light is transmitted, the distance tot the disc, the amount of ambient light and the like.

Thus, a duty cycle of 10-100% may be desired in the installation mode, such as 10-50%, such as 10-30%, such as 12-20%. In the operating mode, a duty cycle of 0.1-40% may be desired in the operating mode, such as 0.2-20%.

A manner of operating the sensor in the operating mode may be seen in the Applicants co-pending application filed on even date and with the title "A METHOD AND A SYSTEM FOR OBTAINING INFORMATION FROM A UTILITY METER". This reference hereby is incorporated by reference.

The second frequency preferably is variable.
Further, the control module may be configured to determine a value of the second frequency, based on a consumption schedule of a commodity being monitored by the utility meter. Thus, a higher frequency may be used when consumption (and thus a higher rotational velocity of the rotational element) is expected. Alternatively or additionally, the second frequency may be determined from an actual consumption or rotational frequency.

The change-over between the installation mode and the operational mode may be facilitated in a number of manners. In one situation, the sensor further comprises a switch configured to shift the sensor between the installation mode and the operational mode. In that or another situation, the control module is further configured to automatically shift the sensor between the installation mode and the operational mode. Automatic shifting from the installation mode to the operational mode may e.g. take place when a constant intensity or an intensity above a threshold, has been received for such a period of time that it can be assumed that the position of the sensor is fixed in relation to the meter. Conversely, it may be desired to shift from the operational mode to the installation mode if a too large intensity variation is seen indicating that the sensor is moved in relation to the meter.

It may be desired, in the above situation where the switch is provided for the user to shift between the modes, to de-activate the switch once the sensor is in the operational mode. The reason for this may be that it is not desired to allow the user to take the sensor out of the operational mode once the operational mode has been initiated. This is particularly interesting when the sensor output in the operational mode is used for e.g. payment purposes where it is of great importance that the read-out is correct. Bringing the sensor back to the installation mode may prevent it from outputting information relating to the passing of the marker.

The sensor preferably further comprises a tamper switch configured to be active in the operational mode and indicate removal of the sensor from the utility meter. Removal of the sensor from the housing thus will, in the operational mode, prevent the sensing of passing of the marker and thus, may result in an erroneous reading of the meter. The tamper switch may detect this.

The sensor preferably further comprises a communication module configured to receive instructions for the control module, from a user. Thus the user may be able to control the sensor from a remote location using a handheld device or a computer. This may be the shifting between modes, the setting up of expected consumption schedules or the read-out of different types of data from the sensor.

The sensor preferably further comprises a battery configured to provide power to the radiation emitter, the radiation detector, the one or more light emitters and the control module. The use of battery makes the sensor portable.

The radiation emitter and the radiation detector preferably are located in close proximity of each other. Locating the radiation emitter and the radiation detector in close proximity simplifies positioning of the sensor with respect to the utility meter. A close proximity makes the sensor more versatile in that it is able to detect rotation of rotational elements with different distances from the sensor.

The rotating element preferably is a disc or a rotating needle.

A second aspect of the present invention relates to a method for reading a utility meter, the method comprising the steps of emitting radiation of a predetermined intensity on to a rotating element of the utility meter, receiving received reflected radiation from a reflective surface of the rotating element of the utility meter and controlling one or more light emitters to indicate an intensity of the received reflected radiation, in a direction away from the utility meter.

The step of indicating preferably comprises a step of illuminating a number of the one or more light emitters, the number being correlated with the intensity of the received reflected radiation.

The step of indicating preferably comprises a step of adapting an intensity of the one or more light emitters, the intensity of the one or more light emitters being correlated with the intensity of the received reflected radiation.

The step of indicating preferably comprises a step of adapting a blinking frequency of the one or more light emitters, the blinking frequency being correlated with the intensity of the received reflected radiation.

The method preferably further comprises a step of fastening the sensor to a housing of the utility meter.

The method preferably further comprises a step of operating the sensor in any one of an installation mode and an operational mode.

The radiation preferably is emitted as pulses at a first frequency, during the installation mode.

The radiation preferably is emitted as a continuous beam, during the installation mode.

The method preferably further comprises a step of adapting the indication in order to compensate for passing of a marker, during the installation mode, wherein the reflective surface comprises the marker having a reflectivity different from the reflectivity of rest of the reflective surface.

The radiation preferably is emitted as pulses at a second frequency, during the operational mode. The second frequency may be variable.

The method preferably further comprises a step of determining a value of the second frequency based on a consumption schedule of a commodity being monitored by the utility meter.

The method preferably further comprises a step of shifting between the installation mode and the operational mode.

The method preferably further comprises a step of receiving instructions from a user.

### BRIEF DESCRIPTION OF THE ACCOMPANYING DRAWINGS

So that the manner in which the above recited features of the present invention can be understood in detail, a more particular description of the invention, briefly summarized above, may have been referred by embodiments, some of which are illustrated in the appended drawings. It is to be noted, however, that the appended drawing illustrate only typical embodiments of this invention and are therefore not to be considered limiting of its scope, for the invention may admit to other equally effective embodiments.

These and other features, benefits, and advantages of the present invention will become apparent by reference to the following text figure, with like reference numbers referring to like structures across the views, wherein:
Fig. 1 illustrates a sensor for reading a utility meter, in accordance with an embodiment of the present invention;
Fig. 2 illustrates a rotating element in the form of a rotating disc; and
Fig. 3 illustrates a method for reading a utility meter, in accordance with an embodiment of the present invention.

### DETAILED DESCRIPTION OF PREFERRED EMBODIMENTS

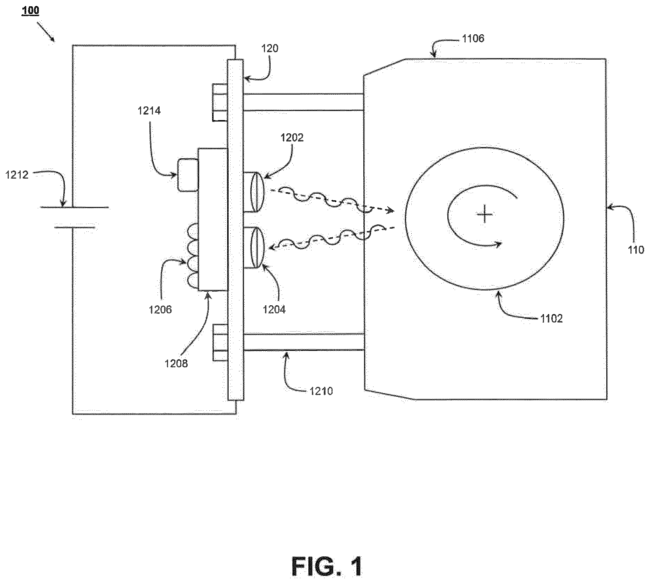

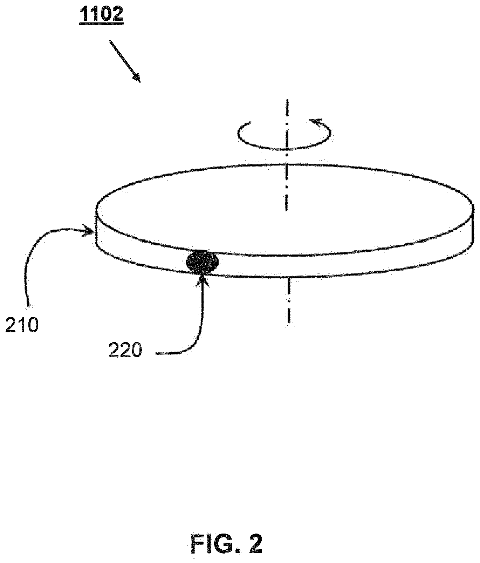

As shown in figure 1, a sensor 120 for reading a utility meter 110, in accordance with an embodiment 100 of the present invention. The utility meter 110 comprises a rotating element 1102 provided in a housing 1106. In accordance with various embodiments, the rotating element 1102 is a disc or a rotating needle. Figure 2 one type of rotating element 1102. As shown in figure 2, the rotating element 1102 has a reflective surface 210. Further, the reflective surface 210 has a marker 220, such as a black dot. The marker 220 has different, typically lower, reflectivity from a reflectivity of rest of the reflective surface 210. Further, the housing 1106 is at least partially transparent.

The sensor 120 comprises a radiation emitter 1202 and a radiation detector 1204. The radiation emitter 1202 preferably is laser. Using laser as the radiation emitter 1202 ensures that there is sufficient intensity of radiation falling on the rotating element 1102 also at larger distances. The radiation emitter 1202 is configured to emit radiation of a predetermined intensity on to the rotating element 1102. Further, the radiation detector 1204 is configured to receive reflected radiation from the reflective surface 210. The sensor 120 further comprises one or more light emitters 1206. In accordance with an embodiment, the one or more light emitters 1206 are, but not limited to, LEDs or OLEDs.

Further, the sensor 120 comprises a control module 1208 configured to instruct the one or more light emitters 1206, to indicate, in a direction away from the utility meter 110, an intensity of the received reflected radiation received by the radiation detector 1204. Thus, the user is able to see directly the quality of position of the sensor 120 from the one or more emitters 1206, as the better the positioning, the more reflected radiation is received. The radiation emitter 1202 and the radiation detector 1204 are preferably located in close proximity of each other, in order to simplify the positioning (see the Applicant's co-pending application filed on even date and with the title "A READER FOR READING A UTILITY METER AND A METHOD OF READING A UTILITY METER"; This reference hereby is incorporated by reference).

Preferably, the radiation emitter 1201 emits visible light so that a user may visibly ensure that the light impinges on the rotating element 1102 and thereby perform an initial, coarse alignment. The sensor 120 further comprises a battery 1212 configured to provide power to the radiation emitter 1202, the radiation detector 1204, the one or more light emitters 1206 and the control module 1208.

The control module 1208 is further configured to have the light emitters 1206 indicate the intensity of the received reflected radiation by illuminating a number of the one or more light emitters 1206. The number is correlated with the intensity of the received reflected radiation. The number is proportional to the intensity so that the higher the intensity, the more light emitters of the one or more light emitters 1206 are illuminated. The one or more light emitters 1206 may be provided as a linear array, where the one or more light emitters 1206 are illuminated from e.g. the left, so that the amount of intensity received may be read out simply by how much to the right light is emitted.

Alternatively, the control module 1208 may be configured to indicate the intensity of the received reflected radiation by adapting an intensity of the one or more light emitters 1206. The intensity of the one or more light emitters 1206 is correlated with the intensity of the received reflected radiation. The higher the intensity of the one or more light emitters 1206 the higher the intensity of the received reflected radiation received, so that when a sufficiently high intensity of the one or more light emitters is output, the position is acceptable. If a sufficient intensity of the received reflected radiation is received, a low intensity or no light may be emitted from the one or more light emitters 1206. In this situation, a single light emitter 1206 may be used.

Alternatively the control module 1208 may be configured to indicate the intensity of the received reflected radiation by adapting a blinking frequency of the one or more light emitters 1206. The blinking frequency could be correlated with the intensity of the received reflected radiation, so that when a sufficiently high intensity of the received reflected radiation received, this may be indicated by a high frequency or a constant intensity output from the one or more light emitters 1206. Alternatively, a sufficiently high intensity of the received reflected radiation received may result in a low blinking frequency or no light emitted from the one or more light emitters 1206. Again, in this situation, a single light emitter may suffice.

Further, it would be appreciated by a person skilled in the art that other manners may also be used for indicating the position and/or the intensity received, such as a color of the light emitted. A red color may indicate a low intensity of the received reflected radiation received and a green color a sufficiently high intensity of the received reflected radiation received. Different colors may be output by different light emitters or the same light emitter. Combinations of these different indication manners may also be used.

Combinations of the above methods may be used.

The control module 1208 is further configured to operate the sensor 120 in an installation mode and an operational mode. In the installation mode, the above position indication is performed and in the operational mode, the position may be fixed and passings of the marker are detected and output as a read-out of the meter.

During the installation mode, the reflected radiation will be received from a portion of the reflective surface 210, including the marker 220, facing the radiation detector. However, the marker 220 will cause a drop in the intensity of the received reflected radiation, erroneously indicating improper positioning of the sensor 120. Therefore, the control module 1208 is further configured to adapt the indication in order to compensate for passing of the marker 220, during the installation mode. For example more light emitters of the one or more light emitters 1206 light up, or the one or more light emitters 1206 blink at higher frequency or with higher intensity. Alternatively, a particular color output may be displayed by the one or more light emitters 1206, so that the user can see that the positioning actually is good.

In one situation, more radiation detectors are used. Thus, the portions of the element 1102 "viewed" by the detectors may be slightly different.

In one example, the radiation emitter and the radiation detectors are provided in the plane of the element 1102 when being a rotating disc. Then, the detectors may be positioned on either side of the emitter.

That set-up may be used for compensating for the detection of the marker 220, as the marker 220 is seen firstly by one and then the other detector. In that situation, the reflection indicated may be compensated. The compensation may be the addition to the received intensity of an amount corresponding to the reflection difference, so that the lower intensity caused by the marker 220 is compensated back to what it would be for another part of the rotating element 1102. However, if the same radiation intensity change is seen by both detectors, it may be due to a position change and no compensation is made.

The two detector radiation detector 1204 may indicate,, in addition to the intensity, a direction along which the sensor should be moved to obtain a better position. In one situation, the sensor has two detectors positioned in the same plane as the rotating element 1102. When the radiation emitter 1202 is positioned, in that plane, between the two detectors and emits radiation toward the rotating element 1102, the detectors will only receive the same intensity if the radiation is emitted directly toward the center of the rotating element 1102. If the radiation is not emitted directly toward the center, the majority of the radiation will, in the plane, be reflected toward one of the detectors, and this may be used for indicating to the user that the sensor should be moved in a direction away from the position of the detector receiving the most intensity. Thus, in that situation, the sensor 120 may, in addition to the intensity read-out, comprise also means for indicating a direction to the user. This indication may also be performed by the light emitters or by e.g. additional emitters, such as one emitter positioned in the plane of the disc and further to the left than the other one positioned in the plane and further to the right.

The sensor 120 may be fastened to the housing 1106. The sensor 120 further comprises a fastening arrangement 1210 configured to fasten the sensor 120 to the housing 1106. The fastening arrangement 1210 is one of, but not limited to, a screw arrangement, an adhesive or a double sided adhesive tape.

Further, the control module 1208 is further configured to instruct the radiation emitter 1202 to emit the radiation in form of pulses at a first frequency, during the installation mode. The first frequency is a relatively high value of frequency, so that a near real time indication of the intensity of the received reflected radiation is provided to the user. The control module 1208 may be configured to instruct the radiation emitter 1202 to emit the radiation in form of a continuous beam, during the installation mode, so that a real time indication of the intensity of the received reflected radiation is provided to the user. It is desired that the user gets a real time or near real time indication of the quality of the position in the form of the intensity received. Thus, a continuous beam or high frequency pulses are desired. Once the position is obtained, the operation may shifted to a mode using lower frequency pulses to save power, where the frequency, as is described further below, may be determined on the basis of the consumption so that no passing of the marker 220 is missed.

The first frequency is selected in e.g. the range of 1 to 100 Hz. During the installation mode, the radiation may be emitted with a predetermined first pulse width duration. The predetermined first pulse width interval may be determined by conducting empirical measurements on various types of utility meters, which ensures that once the emitted radiation is aimed at the rotating element 1102, a good amount of received reflected radiation is received at the radiation detector 1204.

However, once the sensor 120 is installed, it is desired that power be saved, especially for embodiments having the battery 1212. Therefore, the control module 1208 is further configured to instruct the radiation emitter 1202 to emit the radiation in form of pulses at a second frequency, during the operational mode. The second frequency has a relatively lower value (compared to the first frequency). The second frequency may be variable. Further, the control module 1208 is further configured to determine a value of the second frequency based on a consumption schedule of a commodity being monitored by the utility meter 110.

Preferably, the second frequency is selected in the interval of 0 to 60 Hz and is preferably lower than the first frequency. Further, during the operational mode, the radiation is emitted with a second pulse width interval. The second pulse width interval is continuously optimized to provide best power to detection ratio.

For example, the value of the second frequency may be increased when a higher consumption takes place or is expected. A higher consumption may be expected, such as between 6 and 9 AM and between 5 and 11 PM when dinner is usually cooked, clothes or dishes washed, people take baths and the like. Thus, the consumption schedule may be used in aiding in selecting the value of the second frequency in the operational mode. Alternatively or additionally, a present consumption may be used for determining the second frequency in order to ensure that no passing of the marker 220 is undetected.

The change-over between the installation mode and the operational mode may be facilitated in a number of manners. The sensor 120 further comprises a switch configured to shift the sensor 120 between the installation mode and the operational mode. It may be desired, in the above situation where the switch is provided for the user to shift between the modes, to deactivate the switch once the sensor is in the operational mode. The reason for this may be that it is not desired to allow the user to take the sensor out of the operational mode once this mode has been initiated. This is particularly interesting when the sensor output in the operational mode is used for e.g. payment purposes where it is of great importance that the read-out is correct. Bringing the sensor 120 back to the installation mode may prevent it from outputting information relation to the passing of the marker 220.

Alternatively, the control module 1208 is further configured to automatically shift the sensor 120 from the installation mode to the operational mode, for example when a predetermined period of time has lapsed or when a sufficiently good position has been maintained for a period of time. Conversely, it may be desired to revert from the operational mode to the installation mode if a too large intensity variation is seen indicating that the sensor 120 is moved in relation to the utility meter 110.

The sensor 120 further comprises a communication module 1214 configured to receive instructions for the control module 1208, from a user. The instructions may be received, among other things, for shifting between the installation mode and the operational mode. Also, the instructions may be received wirelessly or through a wired connection.

Instructions from a user may be to alter between the operational and installation modes. Also, information may be transmitted as to the consumption schedule (if the sensor is not itself able to learn this over time). The user may enter the instruction into a computer, cell phone, tablet or the like. This instruction may be forwarded directly from the computer to the communication module 1214 or it may be transmitted from the computer via the internet to a central server handling all communication to/from the communication module 1214.

The sensor 120 further comprises a tamper switch configured to be activated in the operational mode and to indicate removal of the sensor 120 from the utility meter 110. Removal of the sensor 120 from the housing 1106 thus will, in the operational mode, prevent the sensing of passing of the marker 220 and thus, may result in an erroneous reading of the meter. The tamper switch may detect this and no action is taken. Various embodiments of a method for reading a utility meter can now be understood taking various embodiments of the sensor 120 as references.

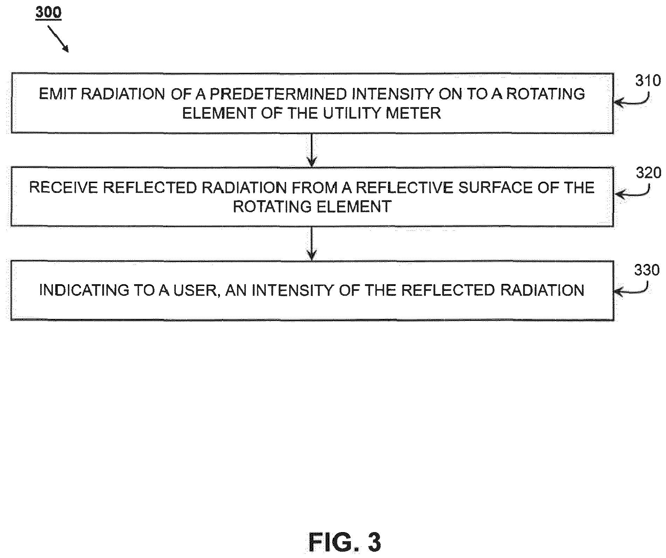

Figure 3 illustrates a method 300 for reading a utility meter. The method begins at step 310, by emitting the radiation of the predetermined intensity on to the rotating element 1102 of the utility meter 110. The emitted radiation need not have a known intensity. It is, however, desired that the intensity is constant (if not CW then constant in pulses). If the intensity varies, this may be taken into account when determining the radiation reflected to provide the correct intensity indication.

The radiation is emitted by the radiation emitter 1202. At step 320, the received reflected radiation is received from the reflective surface 210 of the rotating element 1102, by the radiation detector 1204. At step 330, the intensity of the received reflected radiation is indicated using the one or more light emitters 1206, in the direction away from the utility meter 110, by the control module 1208. Further, the intensity of the received reflected radiation is indicated typically towards a user holding the sensor and positioning it in relation to the rotatable element.

The control module 1208 illuminates a number of the one or more light emitters 1206, the number being correlated with the intensity of the received reflected radiation. Alternatively, the control module 1208 adapts the intensity of the one or more light emitters 1206, the intensity of the one or more light emitters 1206 being correlated with the intensity of the received reflected radiation. Yet alternatively, the control module 1208 adapts the blinking frequency of the one or more light emitters 1206, the blinking frequency being correlated with the intensity of the received reflected radiation. Color may also be used, as may a combination of the methods.

The sensor 120 is operated in any one of the installation mode and the operational mode, by the control module 1208. In accordance with an embodiment, the radiation is emitted in form of pulses at the first frequency, by the radiation emitter 1202, during the installation mode, when the radiation emitter 1202 is instructed to do so by the control module 1208. Alternatively, the radiation is emitted in form of a continuous beam, by the radiation emitter 1202, during the installation mode, when the radiation emitter 1202 is instructed to do so by the control module 1208. The indication is adapted by the control module 1208, in order to compensate for passing of the marker 220, during the installation mode. Further, the sensor 120 is fastened to the housing 1106, once the installation is complete.

The radiation is emitted in form of pulses at the second frequency, by the radiation emitter 1202, during the operational mode, when the radiation emitter 1202 is instructed to do so by the control module 1208. The value of the second frequency may be determined by the control module 1208 based on on the consumption schedule of a commodity being monitored by the utility meter (110). The sensor 120 may be shifted between the installation mode and the operational mode, either through the switch or automatically by the control module 1208. Instructions may be received from the user, by the communication module 1214, for, among other things, making the shift.

The sensor and the method for reading the utility meter offer a multitude of advantages. The sensor can be easily and accurately positioned onto the utility meter using the intensity indication. The sensor may be operated in different modes and power may be saved during operation, once an accurate position has been obtained. This makes the invention suitable for battery operation. Further, the operating modes may be remotely controlled using the communication module.

Various modifications to these embodiments are apparent to those skilled in the art from the description and the accompanying drawings. The principles associated with the various embodiments described herein may be applied to other embodiments. Therefore, the description is not intended to be limited to the embodiments shown along with the accompanying drawings but is to be providing broadest scope of consistent with the principles and the novel and inventive features disclosed or suggested herein. Accordingly, the invention is anticipated to hold on to all other such alternatives, modifications, and variations that fall within the scope of the present invention and appended claim.

## Claims

1. A sensor (120) for reading a utility meter (110), the sensor (120) comprising:
a radiation emitter (1202) configured to emit radiation of a predetermined intensity on to a rotating element (1102) of the utility meter (110);
a radiation detector (1204) configured to receive reflected radiation from a reflective surface (210) of the rotating element (1102) of the utility meter (110);
one or more light emitters (1206); and
a control module (1208) configured to control the one or more light emitters (1206), to indicate, in a direction away from the utility meter, an intensity of the reflected radiation received by the radiation detector (1204).

2. The sensor (120) as claimed in claim 1, wherein the control module (1208) is further configured to indicate the intensity of the reflected radiation by one or more of:
- illuminating a number of the one or more light emitters (1206), the number being correlated with the intensity of the received, reflected radiation,
- adapting an intensity of the one or more light emitters (1206), the intensity of the one or more light emitters (1206) being correlated with the intensity of the received, reflected radiation and/or
- adapting a blinking frequency of the one or more light emitters (1206), the blinking frequency being correlated with the intensity of the received, reflected radiation.

3. The sensor (120) as claimed in claim 1 or 2, wherein the control module (1208) is further configured to operate the sensor (120) in an installation mode and an operational mode.

4. The sensor (120) as claimed in claim 3, wherein the control module (1208) is further configured to instruct the radiation emitter (1202) to emit the radiation as pulses at a first frequency, during the installation mode.

5. The sensor (120) as claimed in claim 3 or 4, wherein the control module (1208) is further configured to instruct the radiation emitter (1202) to emit the radiation as a continuous beam, during the installation mode.

6. The sensor (120) as claimed in any of claims 3-5, wherein the reflective surface (210) comprises a marker (220) having a reflectivity different from a reflectivity of rest of the reflective surface (210) and wherein the control module (1208) is further configured to adapt the indication in order to compensate for passing of the marker (220), during the installation mode.

7. The sensor (120) as claimed in any of claims 3-6, wherein the control module (1208) is further configured to instruct the radiation emitter (1202) to emit the radiation as pulses at a second frequency, during the operational mode.

8. The sensor (120) as claimed in claim 7, wherein the second frequency is variable.

9. A method (300) for reading a utility meter (110), the method (300) comprising the steps of:
emitting (310) radiation of a predetermined intensity on to a rotating element (1102) of the utility meter (110);
receiving (320) reflected radiation from a reflective surface (210) of the rotating element (1102) of the utility meter (110); and
controlling a one or more light emitters to indicate (330) an intensity of the received reflected radiation, in a direction away from the utility meter (110).

10. The method (300) as claimed in claim 9, wherein the step of indicating (330) comprises a step of:
- illuminating a number of the one or more light emitters (1206), the number being correlated with the intensity of the received reflected radiation
- adapting an intensity of the one or more light emitters (1206), the intensity of the one or more light emitters (1206) being correlated with the intensity of the received reflected radiation and/or
- adapting a blinking frequency of the one or more light emitters (1206), the blinking frequency being correlated with the intensity of the received reflected radiation.

11. The method (300) as claimed in claim 9 or 10, further comprising a step of operating the sensor (120) in any one of an installation mode and an operational mode.

12. The method (300) as claimed in claim 11, wherein the radiation is emitted as pulses at a first frequency, during the installation mode.

13. The method (300) as claimed in claim 11 or 12, wherein the radiation is emitted as a continuous beam, during the installation mode.

14. The method (300) as claimed in any of claims 11-13, further comprising a step of adapting the indication in order to compensate for passing of a marker (220), during the installation mode, wherein the reflective surface (210) comprises the marker (220) having a reflectivity different from a reflectivity of rest of the reflective surface (210).

15. The method (300) as claimed in any of claims 11-14, wherein the radiation is emitted as pulses at a second frequency, during the operational mode.
